# EUROPEAN PATENT SPECIFICATION

(11) **EP 3 460 882 B1**
(45) Date of publication and mention of the grant of the patent: **02.03.2022**
(21) Application number: 18741399.2
(22) Date of filing: 23.01.2018
(51) Int. Cl.: H01M 4/36, H01M 4/58, H01M 4/133, H01M 4/587, H01M 4/1393, H01M 4/04, H01M 10/052, H01M 4/131, H01M 4/48

(54) **NEGATIVE ELECTRODE FOR LITHIUM SECONDARY BATTERY, LITHIUM SECONDARY BATTERY COMPRISING SAME, AND METHOD FOR MANUFACTURING SAME**
NEGATIVELEKTRODE FÜR LITHIUMSEKUNDÄRBATTERIE, LITHIUMSEKUNDÄRBATTERIE DAMIT UND VERFAHREN ZUR HERSTELLUNG DAVON
ÉLECTRODE NÉGATIVE POUR BATTERIE SECONDAIRE AU LITHIUM, BATTERIE SECONDAIRE AU LITHIUM LA COMPRENANT ET SON PROCÉDÉ DE FABRICATION

(30) Priority: 23.01.2017 KR 20170010343; 22.01.2018 KR 20180007714
(43) Date of publication of application: 27.03.2019
(73) Proprietor: LG Energy Solution Ltd., 07335 Seoul (KR)
(72) Inventor: CHAE, Oh Byong, Daejeon 34122 (KR); KIM, Eun Kyung, Daejeon 34122 (KR); JUNG, Dong Sub, Daejeon 34122 (KR); WOO, Sang Wook, Daejeon 34122 (KR); CHUNG, Ju Ho, Daejeon 34122 (KR); CHOI, Hee Won, Daejeon 34122 (KR)
(74) Representative: Hoffmann Eitle
(86) International application number: PCT/KR2018/001018
(87) International publication number: WO 2018/135929

(56) References cited:
- EP-A1- 2 660 902
- JP-A- 2000 012 026
- KR-A- 20030 062 541
- KR-A- 20080 076 527
- KR-A- 20120 068 790
- KR-A- 20130 122 469
- US-A1- 2013 177 811

## Description

### TECHNICAL FIELD

### [Technical Field]

The present invention is defined in the claims and relates to a negative electrode for a lithium secondary battery, a lithium secondary battery comprising the same, and a preparation method thereof, and more particularly, to a negative electrode for a lithium secondary battery in which a LiF layer comprising amorphous LiF is formed on a negative electrode active material layer, a lithium secondary battery comprising the same, and a preparation method thereof.

### BACKGROUND ART

Demand for secondary batteries as an energy source has been significantly increased as technology development and demand with respect to mobile devices have increased, and, among these secondary batteries, lithium secondary batteries having high energy density, high operating potential, long cycle life, and low self-discharging rate have been commercialized and widely used.

Lithium metal has been used as a negative electrode of a typical lithium secondary battery. However, since it has been known that a battery short circuit may occur due to the formation of dendrites and there is a risk of explosion due to the short circuit, the lithium metal is being replaced by a carbon-based compound capable of reversibly intercalating and deintercalating lithium ions as well as maintaining structural and electrical properties.

Since the carbon-based compound has a very low discharge voltage of about -3 V with respect to a hydrogen standard electrode potential and exhibits highly reversible charge and discharge behavior due to the uniaxial orientation of a graphene layer, the carbon-based compound exhibits excellent electrode cycle life. Also, since the carbon-based compound may exhibit a potential that is almost similar to pure lithium metal, i.e., the electrode potential of the carbon-based compound is 0 V Li/Li⁺ during lithium (Li)-ion charge, higher energy may be obtained when a battery is formed with an oxide-based positive electrode.

Charge and discharge of the lithium secondary battery is performed while a process of intercalating and deintercalating lithium ions from a lithium metal oxide positive electrode into and out of a graphite negative electrode is repeated. In this case, since lithium is highly reactive, the lithium reacts with the carbon-based compound to form Li₂CO₃, LiO, or LiOH, and thus, a film may be formed on the surface of the negative electrode comprising the carbon-based compound as an active material. The film is denoted as "solid electrolyte interface (SEI)", wherein the SEI formed at an initial stage of charging may prevent a reaction of the lithium ions with the carbon negative electrode or other materials during charge and discharge, and may act as an ion tunnel that only passes the lithium ions. The ion tunnel may prevent the collapse of a structure of the carbon negative electrode due to the co-intercalation of the carbon negative electrode and organic solvents of the electrolyte solution having a high molecular weight which solvates the lithium ions and moves therewith.

However, in a case in which a thick SEI is formed on the surface of the negative electrode, rapid charging capability of the negative electrode may be reduced, and thus, there is a need to form the SEI to an appropriate thickness.

The carbon-based compound, as a negative electrode active material of the lithium secondary battery, is advantageous in that it exhibits excellent cycle performance, but it is disadvantageous in that safety at overcharge and high temperature is somewhat lacking. In order to improve the safety at overcharge and high temperature, there is a need to appropriately suppress a calorific value when the lithium secondary battery is exposed to an overcharge and high-temperature state.

Thus, there is a need to develop a new negative electrode for a lithium secondary battery in which the above-described disadvantages and requirements when the carbon-based compound is used as a negative electrode active material of the lithium secondary battery are improved.

EP2660902 A1 discloses a negative electrode for a rechargeable lithium battery that includes a negative active material layer including a carbon-based material having a peak of about 20 degrees to 30 degrees at a (002) plane in an X-ray diffraction pattern using a CuKα ray, and an SEI (solid electrolyte interface) passivation film including at least one material selected from an organic material and an inorganic material and having an average thickness of about 10 nm to about 50 nm on the surface of the active material layer of the electrode.

### DISCLOSURE OF THE INVENTION

### TECHNICAL PROBLEM

An aspect of the present invention provides a negative electrode for a lithium secondary battery as defined in the claims in which a solid electrolyte interface (SEI) may be formed to an appropriate thickness on the surface thereof.

Another aspect of the present invention provides a lithium secondary battery as defined in the claims comprising the negative electrode for a lithium secondary battery.

Another aspect of the present invention provides a preparation method of the negative electrode for a lithium secondary battery as defined in the claims.

### TECHNICAL SOLUTION

According to an aspect of the present invention, there is provided a negative electrode for a lithium secondary battery comprising: a negative electrode active material layer comprising a carbon-based active material; and a LiF layer which is formed on the negative electrode active material layer and comprises amorphous LiF in an amount of 30 mol% or more based on a total number of moles of LiF included in the LiF layer, and wherein the LiF layer further comprises at least one selected from the group consisting of Li₂O, Li₂CO₃, and LiOH in an amount of 3 wt% to 90 wt%.

According to another aspect of the present invention, there is provided a preparation method of the negative electrode for a lithium secondary battery which comprises the steps of: (1) forming a negative electrode active material layer comprising a carbon-based active material on a negative electrode collector; and (2) depositing a LiF layer on the negative electrode active material layer.

According to another aspect of the present invention, there is provided a lithium secondary battery comprising the negative electrode for a lithium secondary battery.

### ADVANTAGEOUS EFFECTS

Since a solid electrolyte interface (SEI) may be formed to an appropriate thickness on the surface of a negative electrode for a lithium secondary battery according to the present invention, the negative electrode for a lithium secondary battery exhibits excellent rapid charging capability, a low calorific value when exposed to an overcharge and high-temperature state, and good short-circuit safety.

### MODE FOR CARRYING OUT THE INVENTION

Hereinafter, the present invention will be described in more detail to allow for a clearer understanding of the present invention.

A negative electrode for a lithium secondary battery according to the present invention comprises a negative electrode active material layer comprising a carbon-based active material; and a LiF layer which is formed on the negative electrode active material layer and comprises amorphous LiF in an amount of 30 mol% or more based on a total number of moles of LiF included in the LiF layer, and wherein the LiF layer further comprises at least one selected from the group consisting of Li₂O, Li₂CO₃, and LiOH in an amount of 3 wt% to 90 wt%.

The LiF layer is a layer comprising lithium fluoride (LiF) as defined in the claims, wherein LiF may be formed in the form of a thin layer on the negative electrode active material layer comprising a carbon-based active material.

Since the LiF layer may be formed on the negative electrode active material layer comprising a carbon-based active material to suppress an excessive increase in thickness of a solid electrolyte interface (SEI) formed on a surface of the negative electrode during charge and discharge of a lithium secondary battery comprising the negative electrode, the LiF layer may improve rapid charging characteristics of the negative electrode. Also, since the LiF layer may reduce a calorific value when the lithium secondary battery comprising the negative electrode is exposed to an overcharge and high-temperature state by acting as a protective layer of the negative electrode active material layer and may also act as an insulator when a positive electrode and the negative electrode are shortcircuited, the LiF layer may improve safety of the lithium secondary battery.

The LiF layer further comprises at least one selected from the group consisting of Li₂O, Li₂CO₃, and LiOH, in addition to LiF.

The LiF layer comprises the at least one selected from the group consisting of Li₂O, Li₂CO₃, and LiOH in an amount of 3 wt% to 90 wt%, particularly 5 wt% to 50 wt%, and more particularly 7 wt% to 30 wt%. Since the LiF layer comprises the at least one selected from the group consisting of Li₂O, Li₂CO₃, and LiOH within the above range, a fraction of the amorphous LiF included in the LiF layer may be increased, the rapid charging characteristics may be improved, and an effect of reducing the calorific value during overcharge and high-temperature exposure may be further improved.

In the negative electrode for a lithium secondary battery according to an example of the present invention, the carbon-based active material may comprise at least one selected from the group consisting of soft carbon, hard carbon, natural graphite, artificial graphite, Kish graphite, pyrolytic carbon, mesophase pitch based carbon fibers, meso-carbon microbeads, mesophase pitches, petroleum derived cokes, and coal tar pitch derived cokes, may particularly comprise graphite such as natural graphite, artificial graphite, and Kish graphite, and may more particularly comprise natural graphite.

That is, since the negative electrode for a lithium secondary battery according to the specific example of the present invention comprises natural graphite, as a negative electrode active material, and a layer of amorphous LiF formed on the negative electrode active material layer comprising the natural graphite, the negative electrode for a lithium secondary battery may exhibit high safety, in which safety at overcharge and high temperature is improved, while exhibiting excellent cycle performance as an advantage of the natural graphite.

The LiF layer comprises the amorphous LiF in an amount of 30 mol% or more based on a total number of moles of LiF included in the LiF layer, and, since the amorphous LiF has higher ionic conductivity than crystalline LiF, the amorphous LiF may have a better effect on diffusion of lithium (Li) ions.

Instead of directly forming the LiF layer on the negative electrode active material layer comprising the carbon-based active material, when a metal oxide layer is formed on the surface of the negative electrode active material layer comprising the carbon-based active material and a LiF layer is formed on the metal oxide layer, amorphous LiF may be more easily included in the LiF layer. Thus, the negative electrode for a lithium secondary battery according to the example of the present invention may further comprise the metal oxide layer formed between the negative electrode active material layer and the LiF layer.

The amorphous LiF is included in an amount of 30 mole% or more, particularly 60 mol% or more, and more particularly 60 mol% to 99 mol%, for example, 70 mol% to 95 mol% based on a total number of moles of LiF included in the LiF layer. In a case in which the amorphous LiF is included within the above amount range based on the total number of moles of LiF included in the LiF layer, a low calorific value may be obtained when exposed to the overcharge and high-temperature state and good short-circuit safety may be achieved while exhibiting better rapid charging characteristics. That is, in a case in which the amorphous LiF is included within the above amount range, an excellent effect that may be achieved by comprising the amorphous LiF may be more appropriately achieved.

The metal oxide layer may comprise at least one selected from the group consisting of titanium oxide, aluminum oxide, chromium trioxide, zinc oxide, copper oxide, magnesium oxide, zirconium dioxide, molybdenum trioxide, vanadium pentoxide, niobium pentoxide, iron oxide, manganese oxide, vanadium oxide, cobalt oxide, nickel oxide, and tantalum pentoxide, and may specifically comprise at least one selected from the group consisting of aluminum oxide, chromium trioxide, zirconium dioxide, and tantalum pentoxide.

Also, the negative electrode for a lithium secondary battery according to the example of the present invention may further comprise a lithium compound layer formed on the LiF layer, and the lithium compound layer may comprise at least one selected from the group consisting of Li₂O, Li₂CO₃, and LiOH. In a case in which the lithium compound layer is further formed on the LiF layer, since the lithium compound layer acts as an additional active material protective layer, the calorific value when exposed to the overcharge and high-temperature state may be further lowered and additional short-circuit safety may be provided.

In the negative electrode for a lithium secondary battery according to the example of the present invention, the negative electrode active material layer may have a thickness of 10 µm to 100 µm, for example, 50 µm to 80 µm.

In the negative electrode for a lithium secondary battery according to the example of the present invention, the LiF layer may have a thickness of 10 nm to 1,000 nm, particularly 50 nm to 200 nm, and more particularly 50 nm to 100 nm.

In a case in which the LiF layer has a thickness within the above range, it may allow the LiF layer itself not to be an electrical resistance layer while the LiF layer may more appropriately exhibit an effect of adjusting the thickness of the SEI formed during charge and discharge of the lithium secondary battery and may more appropriately function as a protective layer of the negative electrode active material layer.

In the negative electrode for a lithium secondary battery according to the example of the present invention, the metal oxide layer may have a thickness of 1 nm to 50 nm, for example, 2 nm to 5 nm.

In a case in which the metal oxide layer has a thickness within the above range, since the amorphous LiF may be more easily formed during the formation of the LiF layer, it may allow the metal oxide layer itself not to be an electrical resistance layer while the LIF layer is allowed to more appropriately comprise the amorphous LiF.

Furthermore, the present invention provides a preparation method of the negative electrode for a lithium secondary battery.

The preparation method of the negative electrode for a lithium secondary battery of the present invention comprises the steps of: (1) forming a negative electrode active material layer comprising a carbon-based active material on a negative electrode collector; and (2) depositing a LiF layer on the negative electrode active material layer.

In step (1), a negative electrode active material layer comprising a carbon-based active material is formed on a negative electrode collector as in a conventional method. For example, the negative electrode may be prepared according to the method of forming the negative electrode active material layer on the negative electrode collector in which, after a slurry is prepared by mixing and stirring the carbon-based active material with a solvent as well as a binder and a conductive agent, if necessary, the negative electrode collector is coated with the slurry, compressed, and then dried.

In step (2), a LiF layer is deposited on the negative electrode active material layer formed in step (1).

The deposition may be performed by sputtering, E-Beam, physical vapor deposition (PVD) comprising evaporation or thermal evaporation, or chemical vapor deposition (CVD).

Since the LIF layer is formed by the deposition, the LiF layer may be adjusted to have a more appropriate thickness.

The deposition may be performed in a temperature range of 700°C to 900°C, for example, 750°C to 850°C, and may be performed for 5 minutes to 12 hours, particularly 5 minutes to 6 hours, and more particularly 10 minutes to 4 hours. When the deposition temperature is less than the above range, the deposition may not be smoothly performed, and, when the deposition temperature is greater than the above range, since the amount of the amorphous LiF included in the LiF layer may be reduced, it is necessary to appropriately adjust the deposition temperature within the above range. Also, since the thickness of the LiF layer formed is adjusted by the deposition time, it is necessary to appropriately adjust the deposition time within the above range according to the thickness of the LiF layer to be formed.

Between steps (1) and (2), step (3) of forming a metal oxide layer on the negative electrode active material layer may be further included.

In a case in which step (3) of forming a metal oxide layer is performed, the LiF layer may be formed on the metal oxide layer.

In a case in which the LiF layer is formed on the metal oxide layer in comparison to a case where the LiF layer is deposited on the negative electrode active material layer, the LiF layer is allowed to more easily comprise the amorphous LiF. Thus, since the metal oxide layer is preferentially formed on the negative electrode active material layer in step (3), the LiF layer is allowed to more effectively comprise the amorphous LiF.

The forming of the metal oxide layer may be performed by drop coating, chemical vapor deposition, melting coating, electrodynamic coating, electrospraying, electrospinning, or dip coating.

The negative electrode active material layer may have a porosity of 10% to 60%, particularly 20% to 40%, and more particularly 25% to 35%.

The negative electrode collector is generally formed to a thickness of 3 µm to 500 µm. The negative electrode collector is not particularly limited as long as it has conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, similar to a positive electrode collector, microscopic irregularities may be formed on the surface of the collector to improve the adhesion of the negative electrode active material, and the negative electrode collector may be used in various shapes such as a film, a sheet, a foil, a net, a porous body, a foam body, a non-woven fabric body, and the like.

Any binder and conductive gent typically used in the art may be used as the binder and the conductive agent used in the negative electrode.

An organic solvent, such as N-methylpyrrolidone (NMP), dimethylformamide (DMF), acetone, and dimethylacetamide, or water may be used as the solvent used for forming the negative electrode. These solvents may be used alone or in a mixture of two or more thereof. An amount of the solvent used may be sufficient if the solvent may dissolve and disperse the negative electrode active material, the binder, and the conductive agent in consideration of a coating thickness of the slurry and manufacturing yield.

Various types of binder polymers, such as a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylate, an ethylene-propylene-diene monomer (EPDM), a sulfonated EPDM, a styrene-butadiene rubber (SBR), a fluorine rubber, poly acrylic acid, and a polymer having hydrogen thereof substituted with Li, sodium (Na), or calcium (Ca), or various copolymers, may be used as the binder.

Any conductive agent may be used without particular limitation so long as it has conductivity without causing adverse chemical changes in the battery, and, for example, a conductive material such as: graphite such as natural graphite or artificial graphite; a carbon black such as acetylene black, Ketjen black, channel black, furnace black, lamp black, and thermal black; conductive fibers such as carbon fibers and metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

According to an embodiment of the present invention, the negative electrode may further comprise a thickener for viscosity control. The thickener may be a cellulose-based compound, and, for example, the thickener may comprise at least one selected from the group consisting of carboxymethyl cellulose (CMC), hydroxy methyl cellulose, hydroxy ethyl cellulose, and hydroxy propyl cellulose, and may particularly comprise CMC. The negative electrode active material and binder as well as the thickener may be dispersed in water to be used in the negative electrode.

The present invention provides a lithium secondary battery comprising the negative electrode for a lithium secondary battery.

The lithium secondary battery may comprise the negative electrode, a positive electrode, and a separator disposed between the positive electrode and the negative electrode.

The positive electrode may be prepared by a typical method known in the art. For example, a binder, a conductive agent, and a dispersant, if necessary, as well as a solvent are mixed with a positive electrode active material and stirred to prepare a slurry, a metal current collector is then coated with the slurry and pressed, and the positive electrode may then be prepared by drying the coated metal current collector.

The metal current collector is a metal with high conductivity, wherein the metal current collector is not particularly limited so long as it, as a metal to which the slurry of the positive electrode active material may be easily adhered, has high conductivity without causing adverse chemical changes in the battery in a voltage range of the battery, and, for example, stainless steel, aluminum, nickel, titanium, fired carbon, or aluminum or stainless steel that is surface-treated with one of carbon, nickel, titanium, silver, or the like may be used. Also, the metal current collector may have a microscopic uneven surface to improve the adhesion of the positive electrode active material. The current collector may be used in various shapes, such as a film, a sheet, a foil, a net, a porous body, a foam body, a non-woven fabric body, and the like, and may have a thickness of 3 µm to 500 µm.

In the preparation method of a lithium secondary battery of the present invention, examples of the positive electrode active material may be lithium cobalt oxide (LiCoO₂); lithium nickel oxide (LiNiO₂); Li[NiₐCo_{b}Mn_{c}M¹_{d}]O₂ (where M¹ is at least one element selected from the group consisting of aluminum (Al), gallium (Ga), and indium (In), 0.3≤a<0.1, 0≤b≤0.5, 0≤c≤0.5, 0≤d≤0.1, and a+b+c+d=1); a layered compound, such as Li(LiₑM²_{f-e-f'}M³_{f'})O_{2-g}A_{g} (where 0≤e≤0.2, 0.6≤f≤1, 0≤f'≤0.2, 0≤g≤0.2, M² comprises manganese (Mn) and at least one selected from the group consisting of nickel (Ni), cobalt (Co), iron (Fe), chromium (Cr), vanadium (V), copper (Cu), zinc (Zn), and titanium (Ti), M³ is at least one selected from the group consisting of Al, magnesium (Mg), and boron (B), and A is at least one selected from the group consisting of phosphorous (P), fluorine (F), sulfur (S), and nitrogen (N)), or a compound substituted with at least one transition metal; lithium manganese oxides such as Li₁₊ₕMn₂₋ₕO₄ (where 0≤h≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni-site type lithium nickel oxide represented by the chemical formula LiNi₁₋ᵢM⁴ᵢO₂ (where M⁴ = Co, Mn, Al, Cu, Fe, Mg, B, or Ga, and 0.01≤i≤0.3); lithium manganese composite oxide represented by the chemical formula LiMn₂₋ⱼM⁵ⱼO₂ (where M⁵ = Co, Ni, Fe, Cr, Zn, or Ta, and 0.01≤j≤0.1) or Li₂Mn₃M⁶O₈ (where M⁶ = Fe, Co, Ni, Cu, or Zn); LiMn₂O₄ having a part of Li being substituted with alkaline earth metal ions; a disulfide compound; LiFe₃O₄, or Fe₂(MoO₄)₃, but the positive electrode active material is not limited thereto.

An organic solvent, such as N-methylpyrrolidone (NMP), dimethylformamide (DMF), acetone, and dimethylacetamide, or water may be used as the solvent used for forming the positive electrode. These solvents may be used alone or in a mixture of two or more thereof. An amount of the solvent used may be sufficient if the solvent may dissolve and disperse the positive electrode active material, the binder, and the conductive agent in consideration of a coating thickness of the slurry and manufacturing yield.

Various types of binder polymers, such as a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, poly acrylic acid, and a polymer having hydrogen thereof substituted with Li, Na, or Ca, or various copolymers, may be used as the binder.

Any conductive agent may be used without particular limitation so long as it has conductivity without causing adverse chemical changes in the battery, and, for example, a conductive material such as: graphite such as natural graphite or artificial graphite; a carbon black such as acetylene black, Ketjen black, channel black, furnace black, lamp black, and thermal black; conductive fibers such as carbon fibers and metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

An aqueous dispersant or an organic dispersant, such as N-methyl-2-pyrrolidone, may be used as the dispersant.

A typical porous polymer film used as a typical separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the separator is not limited thereto.

A lithium salt, which may be included as an electrolyte used in the present invention, may be used without limitation so long as it is typically used in an electrolyte for a lithium secondary battery. For example, any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

The electrolyte used in the present invention may comprise an organic liquid electrolyte, an inorganic liquid electrolyte, a solid polymer electrolyte, a gel-type polymer electrolyte, a solid inorganic electrolyte, and a molten inorganic electrolyte, which may be used in the preparation of a lithium secondary battery, but the present invention is not limited thereto.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module comprising a plurality of battery cells.

### Examples

Hereinafter, the present invention will be described in detail, according to examples and experimental examples, but the present invention is not limited to these examples and experimental examples. The invention may be embodied in many different forms and should not be construed as being limited to the embodiments set forth herein. Rather, these example embodiments are provided so that this description will be thorough and complete, and will fully convey the scope of the present invention to those skilled in the art.

### Example 1 does not form part of invention and is provided for information purposes only

A negative electrode active material slurry was prepared by adding 96 wt% of natural graphite, as a negative electrode active material, 1 wt% of Denka black (conductive agent), 2 wt% of SBR (binder), and 1 wt% of CMC (thickener) to water. After one surface of a copper current collector was coated with the prepared negative electrode active material slurry to a thickness of 65 µm, dried, and rolled, the coated copper current collector was punched into a predetermined size to prepare a negative electrode. LiF was deposited on the active material layer of the above-prepared negative electrode by physical vapor deposition (PVD). For the deposition, LiF powder was put in a thermal evaporator (Sunic System Co., Ltd.) and evaporated at 800°C for 1 hour by thermal evaporation, and a final negative electrode was prepared by depositing a LiF layer to a thickness of 100 nm on a graphite electrode.

### Example 2 does not form part of invention and is provided for information purposes only

A negative electrode was prepared in the same manner as in Example 1 except that the deposition was performed at 800°C for 6 minutes to form a LiF layer having a thickness of 10 nm.

### Example 3 does not form part of invention and is provided for information purposes only

A negative electrode active material slurry was prepared by adding 96 wt% of natural graphite, as a negative electrode active material, 1 wt% of Denka black (conductive agent), 2 wt% of SBR (binder), and 1 wt% of CMC (thickener) to water. After one surface of a copper current collector was coated with the prepared negative electrode active material slurry to a thickness of 65 µm, dried, and rolled, the coated copper current collector was punched into a predetermined size to prepare a negative electrode.

An Al₂O₃ layer was formed to a thickness of 2 nm on the active material layer of the above-prepared negative electrode by applying a power of 100 W for 10 seconds using a sputter.

LiF was deposited on the Al₂O₃ layer by physical vapor deposition (PVD). For the deposition, LiF powder was put in a thermal evaporator (Sunic System Co., Ltd.) and a final negative electrode was prepared by depositing a LiF layer to a thickness of 100 nm on a graphite electrode through thermal evaporation.

### Example 4 does not form part of invention and is provided for information purposes only

A negative electrode was prepared in the same manner as in Example 3 except that an Al₂O₃ layer was formed to a thickness of 5 nm by applying a power of 100 W for 30 seconds.

### Example 5 does not form part of invention and is provided for information purposes only

A negative electrode was prepared in the same manner as in Example 3 except that a LiF layer was deposited to a thickness of 10 nm.

### Example 6

A negative electrode active material slurry was prepared by adding 96 wt% of natural graphite, as a negative electrode active material, 1 wt% of Denka black (conductive agent), 2 wt% of SBR (binder), and 1 wt% of CMC (thickener) to water. After one surface of a copper current collector was coated with the prepared negative electrode active material slurry to a thickness of 65 µm, dried, and rolled, the coated copper current collector was punched into a predetermined size to prepare a negative electrode.

Both LiF and Li₂CO₃ were deposited on the active material layer of the above-prepared negative electrode by physical vapor deposition (PVD). For the deposition, LiF powder and Li₂CO₃ powder, as raw materials, were put in a thermal evaporator (Sunic System Co., Ltd.) and evaporated at 800°C for 1 hour and 10 minutes by thermal evaporation, and a final negative electrode was prepared by depositing a mixed layer of LiF and Li₂CO₃ to a thickness of 110 nm on a graphite electrode.

### Example 7 does not form part of invention and is provided for information purposes only

A final negative electrode was prepared by further forming a 10 nm thick Li₂CO₃ layer by depositing Li₂CO₃ on the LiF layer of the negative electrode, on which the LiF layer having a thickness of 100 nm and prepared in Example 1 was deposited, for 6 minutes by physical vapor deposition (PVD).

### Comparative Example 1

A negative electrode active material slurry was prepared by adding 96 wt% of natural graphite, as a negative electrode active material, 1 wt% of Denka black (conductive agent), 2 wt% of SBR (binder), and 1 wt% of CMC (thickener) to water. After one surface of a copper current collector was coated with the prepared negative electrode active material slurry to a thickness of 65 µm, dried, and rolled, the coated copper current collector was punched into a predetermined size to prepare a negative electrode.

### Comparative Example 2

A negative electrode was prepared in the same manner as in Example 2 except that a highly crystalline LiF layer having a thickness of 10 nm was formed by changing the deposition temperature of Example 2 to 1,000°C.

### Examples 1-1 to 7-1 and Comparative Examples 1-1 and 2-1: Preparation of Lithium Secondary Battery (Examples 1-1 to 5-1 and 7-1 do not form part of the invention)

A Li metal foil (150 µm) was used as a counter electrode, a polyolefin separator was disposed between each of the negative electrodes prepared in Examples 1 to 7 and Comparative Examples 1 and 2 and the Li metal, and a coin-type half cell was then prepared by injecting an electrolyte in which 1 M LiPF₆ was dissolved in a solvent that was prepared by mixing ethylene carbonate (EC) and diethyl carbonate (DEC) in a volume ratio of 50:50.

### Experimental Example 1 - Measurement of Amount of Amorphous LiF

An amount of amorphous LiF included in the LiF layer of the negative electrodes respectively prepared in Examples 1 to 7 and Comparative Example 2 was measured by a transmission electron microscope (TEM), and the results thereof are presented in Table 1 below.

### Experimental Example 2 - Rapid Charging Test

Rapid charging tests were performed on the batteries respectively prepared in Examples 1-1 to 7-1 and Comparative Examples 1-1 and 2-1 using an electrochemical charger/discharger. Before the rapid charging tests, an activation process was performed, and, specifically, the activation process was performed by performing 3 cycles of charging and discharging of each battery at a current density of 0.1 C-rate in a voltage range of 1.5 V to 0.005 V.

The rapid charging tests were performed on the batteries completing the activation process, and, specifically, rapid charging was performed at a current density of 2.9 C-rate for 12 minutes, and a state of charge (SOC) before the occurrence of lithium precipitation was measured based on a voltage graph thus obtained. SOCs when the lithium precipitation occurred are presented in Table 1 below.

### Experimental Example 3 - Calorimetry Experiment

An activation process was performed on the batteries respectively prepared in Examples 1-1 to 7-1 and Comparative Examples 1-1 and 2-1 by performing 3 cycles of charging and discharging of each battery at a current density of 0.1 C-rate in a voltage range of 1.5 V to 0.005 V.

After powder was obtained by scraping off the negative electrode layer in the battery charged to 0.005 V, 0.1 mL of an electrolyte solution (1 M LiPF₆ was dissolved in a solvent in which ethylene carbonate (EC) and diethyl carbonate (DEC) were mixed in a volume ratio of 50:50) was added to 13 mg of the powder, and the mixture thus obtained was then loaded into a differential scanning calorimeter (DSC, Mettler Toledo) and heated at a rate of 10°C/min to measure a heat flow. The results thereof are presented in Table 1.

**[Table 1]**

| | Faction of amorphous LiF (mol%) | Lithium precipitation SOC (%) | Onset (°C) | Main peak (°C) | Calorific value (J/g) |
|---|---|---|---|---|---|
| Example 1-1 | 61 | 45 | 132 | 293 | 1,900 |
| Example 2-1 | 57 | 43 | 106 | 275 | 2,900 |
| Example 3-1 | 81 | 54 | 147 | 296 | 1,800 |
| Example 4-1 | 87 | 57 | 152 | 298 | 1,700 |
| Example 5-1 | 79 | 53 | 122 | 278 | 2,700 |
| Example 6-1 | 63 | 47 | 139 | 297 | 1,830 |
| Example 7-1 | 60 | 44 | 135 | 295 | 1,850 |
| Comparative Example 1-1 | - | 34 | 97 | 260 | 4,300 |
| Comparative Example 2-1 | 27 | 37 | 101 | 267 | 3,700 |

Referring to Table 1, the lithium secondary batteries of Examples 1-1 to 7-1 respectively comprising the negative electrodes of Examples 1 to 7 had a SOC when lithium precipitation occurred of 43% or more, wherein it may be confirmed that the SOCs when lithium precipitation occurred were larger than 34%, a SOC of the lithium secondary battery of Comparative Example 1-1 comprising the negative electrode of Comparative Example 1, and 37%, a SOC of the lithium secondary battery of Comparative Example 2-1 comprising the negative electrode of Comparative Example 2. That is, it may be understood that the lithium secondary batteries of Examples 1-1 to 7-1 may stably have a larger amount of charge before lithium precipitated during rapid charging than the lithium secondary batteries of Comparative Examples 1-1 and 2-1.

Also, when the lithium secondary batteries of Comparative Examples 1-1 and 2-1 were compared, it may be confirmed that lithium secondary battery of Comparative Example 2-1 had a larger state of charge when lithium precipitation occurred.

From the above results, with respect to the negative electrode in which LiF was deposited on the negative electrode active material layer comprising natural graphite, since a stable and thin SEI is allowed to be formed by the LiF layer during the activation process, it is considered that the rapid charging was improved.

However, when the lithium secondary batteries of Example 2-1 and Comparative Example 2-1 were compared, all of the negative electrodes included in these lithium secondary batteries had the 10 nm thick LiF layer formed on the negative electrode active material layer, but the state of charges when lithium precipitation occurred of the lithium secondary batteries of Example 2-1 and Comparative Example 2-1 were 43% and 37%, respectively. With respect to the negative electrodes included in the lithium secondary batteries of Example 2-1 and Comparative Example 2-1, since there was a difference only in the amount of the amorphous LiF included in the LiF layer, it may be confirmed that, in a case in which the LiF layer formed on the negative electrode active material layer included a predetermined amount or more of the amorphous LiF, excellent rapid charging characteristics may be obtained.

Furthermore, referring to the calorimetry experiment of Table 1, the negative electrodes included in the lithium secondary batteries of Examples 1-1 to 7-1 had higher onset temperatures and higher main peak temperatures than the negative electrodes included in the lithium secondary batteries of Comparative Examples 1-1 and 2-1. From these results, it may be considered that the lithium secondary batteries of Examples 1-1 to 7-1 may be more safely maintained at high temperature. Also, the negative electrodes included in the lithium secondary batteries of Examples 1-1 to 7-1 had lower calorific values than the negative electrodes included in the lithium secondary batteries of Comparative Examples 1-1 and 2-1, wherein, from these results, it may be predicted that the lithium secondary batteries of Examples 1-1 to 7-1 may be safer when exposed to high temperature than the lithium secondary batteries of Comparative Examples 1-1 and 2-1.

## Claims

1. A negative electrode for a lithium secondary battery, the negative electrode comprising:
a negative electrode active material layer comprising a carbon-based active material;
a LiF layer which comprises amorphous LiF in an amount of 30 mol% or more based on a total number of moles of LiF included in the LiF layer, and
optionally a metal oxide layer, wherein:
when the metal oxide layer is not present, the LiF layer is formed on the negative electrode active material layer, and
when the metal oxide layer is present, the metal oxide layer is formed between the negative electrode active material layer and the LiF layer, and wherein
the LiF layer further comprises at least one selected from the group consisting of Li₂O, Li₂CO₃, and LiOH in an amount of 3 wt% to 90 wt%.

2. The negative electrode for a lithium secondary battery of claim 1, wherein the carbon-based active material comprises at least one selected from the group consisting of soft carbon, hard carbon, natural graphite, artificial graphite, Kish graphite, pyrolytic carbon, mesophase pitch based carbon fibers, meso-carbon microbeads, mesophase pitches, petroleum derived cokes, and coal tar pitch derived cokes.

3. The negative electrode for a lithium secondary battery of claim 1, wherein the metal oxide layer comprises at least one selected from the group consisting of titanium oxide, aluminum oxide, chromium trioxide, zinc oxide, copper oxide, magnesium oxide, zirconium dioxide, molybdenum trioxide, vanadium pentoxide, niobium pentoxide, iron oxide, manganese oxide, vanadium oxide, cobalt oxide, nickel oxide, and tantalum pentoxide.

4. The negative electrode for a lithium secondary battery of claim 1, further comprising a lithium compound layer formed on the LiF layer,
wherein the lithium compound layer comprises at least one selected from the group consisting of Li₂O, Li₂CO₃, and LiOH.

5. The negative electrode for a lithium secondary battery of claim 1, wherein the amorphous LiF is included in an amount of 60 mol% or more based on a total number of moles of LiF included in the LiF layer.

6. The negative electrode for a lithium secondary battery of claim 1, wherein the LiF layer has a thickness of 10 nm to 1,000 nm.

7. The negative electrode for a lithium secondary battery of claim 1, wherein the metal oxide layer has a thickness of 1 nm to 50 nm.

8. A preparation method of the negative electrode for a lithium secondary battery of claim 1, the method comprising steps of:
(1) forming the negative electrode active material layer comprising the carbon-based active material on a negative electrode collector; and
either (2) when the metal oxide layer is not present, depositing the LiF layer on the negative electrode active material layer,
or (3) when the metal oxide layer is present, forming a metal oxide layer on the negative electrode active material layer after step (1) and before depositing the LiF layer on the metal oxide layer.

9. The method of claim 8, wherein the forming of the metal oxide layer is performed by drop coating, chemical vapor deposition, melting coating, electrodynamic coating, electrospraying, electrospinning, or dip coating.

10. A lithium secondary battery comprising the negative electrode for a lithium secondary battery of claim 1.

## Patentansprüche

1. Negative Elektrode für eine Lithium-Sekundärbatterie, wobei die negative Elektrode umfasst:
eine Negativelektroden-Aktivmaterialschicht, umfassend ein Aktivmaterial auf Kohlenstoffbasis;
eine LiF-Schicht, die amorphes LiF in einer Menge von 30 mol-% oder mehr umfasst, bezogen auf die Gesamtmolzahl von LiF, das in der LiF-Schicht enthalten ist, und
optional eine Metalloxidschicht, worin:
wenn die Metalloxidschicht nicht vorliegt, die LiF-Schicht auf der Negativelektroden-Aktivmaterialschicht gebildet ist, und
wenn die Metalloxidschicht vorliegt, die Metalloxidschicht zwischen der Negativelektroden-Aktivmaterialschicht und der LiF-Schicht gebildet ist, und worin
die LiF-Schicht ferner in einer Menge von 3 Gew.-% bis 90 Gew.-%. mindestens eines umfasst, ausgewählt aus der Gruppe bestehend aus Li₂O, Li₂CO₃ und LiOH.

2. Negative Elektrode für eine Lithium-Sekundärbatterie gemäß Anspruch 1, worin das Aktivmaterial auf Kohlenstoffbasis mindestens eines umfasst, das ausgewählt ist aus der Gruppe bestehend aus weichem Kohlenstoff, hartem Kohlenstoff, natürlichem Graphit, künstlichem Graphit, Kish-Graphit, pyrolytischem Kohlenstoff, Kohlenstofffasern auf Mesophasenpechbasis, Meso-Kohlenstoff-Mikrokügelchen, Mesophasen-Pech, Koks aus Erdöl und Koks aus Kohlenteerpech.

3. Negative Elektrode für eine Lithium-Sekundärbatterie gemäß Anspruch 1, worin die Metalloxidschicht mindestens eines umfasst, ausgewählt aus der Gruppe bestehend aus Titanoxid, Aluminiumoxid, Chromtrioxid, Zinkoxid, Kupferoxid, Magnesiumoxid, Zirkoniumdioxid, Molybdäntrioxid, Vanadiumpentoxid, Niobiumpentoxid, Eisenoxid, Manganoxid, Vanadiumoxid, Kobaltoxid, Nickeloxid und Tantalpentoxid.

4. Negative Elektrode für eine Lithium-Sekundärbatterie gemäß Anspruch 1, ferner umfassend eine auf der LiF-Schicht gebildete Lithiumverbindungsschicht,
worin die Lithiumverbindungsschicht mindestens eines umfasst, ausgewählt aus der Gruppe bestehend aus Li₂O, Li₂CO₃ und LiOH.

5. Negative Elektrode für eine Lithium-Sekundärbatterie gemäß Anspruch 1, worin das amorphe LiF in einer Menge von 60 mol-% oder mehr enthalten ist, bezogen auf die Gesamtmolzahl von LiF, das in der LiF-Schicht enthalten ist.

6. Negative Elektrode für eine Lithium-Sekundärbatterie gemäß Anspruch 1, worin die LiF-Schicht eine Dicke von 10 nm bis 1.000 nm aufweist.

7. Negative Elektrode für eine Lithium-Sekundärbatterie gemäß Anspruch 1, worin die Metalloxidschicht eine Dicke von 1 nm bis 50 nm aufweist.

8. Herstellungsverfahren für die negative Elektrode für eine Lithium-Sekundärbatterie gemäß Anspruch 1, wobei das Verfahren die Schritte umfasst:
(1) Bilden der Negativelektroden-Aktivmaterialschicht, umfassend das Aktivmaterial auf Kohlenstoffbasis, auf einem negativen Elektroden-Stromabnehmer; und entweder
(2) wenn die Metalloxidschicht nicht vorliegt, Abscheiden der LiF-Schicht auf der Negativelektroden-Aktivmaterialschicht, oder
(3) wenn die Metalloxidschicht vorliegt, Bilden einer Metalloxidschicht auf der Negativelektroden-Aktivmaterialschicht nach dem Schritt (1) und vor dem Abscheiden der LiF-Schicht auf der Metalloxidschicht.

9. Verfahren gemäß Anspruch 8, worin das Bilden der Metalloxidschicht durchgeführt wird durch Tropfenbeschichtung, chemische Dampfabscheidung, Schmelzbeschichtung, elektrodynamische Beschichtung, Elektrosprühen, Elektrospinnen oder Eintauchbeschichtung.

10. Lithium-Sekundärbatterie, umfassend die negative Elektrode für eine Lithium-Sekundärbatterie gemäß Anspruch 1.

## Revendications

1. Électrode négative pour une batterie secondaire au lithium, l'électrode négative comprenant :
une couche de matériau actif d'électrode négative comprenant un matériau actif à base de carbone ;
une couche de LiF qui comprend du LiF amorphe dans une quantité de 30 % en moles ou plus sur la base d'un nombre total de moles de LiF incluses dans la couche de LiF, et
facultativement une couche d'oxyde métallique, dans laquelle :
lorsque la couche d'oxyde métallique n'est pas présente, la couche de LiF est formée sur la couche de matériau actif d'électrode négative, et
lorsque la couche d'oxyde métallique est présente, la couche d'oxyde métallique est formée entre la couche de matériau actif d'électrode négative et la couche de LiF, et dans laquelle
la couche de LiF comprend en outre au moins l'un sélectionné dans le groupe consistant en Li₂O, Li₂CO₃ et LiOH dans une quantité de 3 % en poids à 90 % en poids.

2. Électrode négative pour une batterie secondaire au lithium selon la revendication 1, dans laquelle le matériau actif à base de carbone comprend au moins l'un sélectionné dans le groupe consistant en du carbone souple, du carbone dur, du graphite naturel, du graphite artificiel, du graphite Kish, du carbone pyrolytique, des fibres de carbone à base de brai mésophase, des microbilles de mésocarbone, des brais mésophases, des cokes dérivés du pétrole et des cokes dérivés du brai de goudron de houille.

3. Électrode négative pour une batterie secondaire au lithium selon la revendication 1, dans laquelle la couche d'oxyde métallique comprend au moins l'un sélectionné dans le groupe consistant en de l'oxyde de titane, de l'oxyde d'aluminium, du trioxyde de chrome, de l'oxyde de zinc, de l'oxyde de cuivre, de l'oxyde de magnésium, du dioxyde de zirconium, du trioxyde de molybdène, du pentoxyde de vanadium, du pentoxyde de niobium, de l'oxyde de fer, de l'oxyde de manganèse, de l'oxyde de vanadium, de l'oxyde de cobalt, de l'oxyde de nickel et du pentoxyde de tantale.

4. Électrode négative pour une batterie secondaire au lithium selon la revendication 1, comprenant en outre une couche de composé de lithium formée sur la couche de LiF,
dans laquelle la couche de composé de lithium comprend en outre au moins l'un sélectionné dans le groupe consistant en Li₂O, Li₂CO₃ et LiOH.

5. Électrode négative pour une batterie secondaire au lithium selon la revendication 1, dans laquelle le LiF amorphe est inclus dans une quantité de 60 % en moles ou plus, sur la base d'un nombre total de moles de LiF incluses dans la couche de LiF.

6. Électrode négative pour une batterie secondaire au lithium selon la revendication 1, dans laquelle la couche de LiF présente une épaisseur de 10 nm à 1 000 nm.

7. Électrode négative pour une batterie secondaire au lithium selon la revendication 1, dans laquelle la couche d'oxyde métallique présente une épaisseur de 1 nm à 50 nm.

8. Procédé de préparation de l'électrode négative pour une batterie secondaire au lithium selon la revendication 1, le procédé comprenant les étapes consistant à :
(1) former la couche de matériau actif d'électrode négative comprenant le matériau actif à base de carbone sur un collecteur d'électrode négative ; et
soit (2) lorsque la couche d'oxyde métallique n'est pas présente, déposer la couche de LiF sur la couche de matériau actif d'électrode négative,
ou (3) lorsque la couche d'oxyde métallique est présente, former une couche d'oxyde métallique sur la couche de matériau actif d'électrode négative après l'étape (1) et avant le dépôt de la couche de LiF sur la couche d'oxyde métallique.

9. Procédé selon la revendication 8, dans lequel la formation de la couche d'oxyde métallique est effectuée par dépôt en gouttes, dépôt chimique en phase vapeur, revêtement par fusion, revêtement électrodynamique, électrospray, électrospinning ou revêtement par immersion.

10. Batterie secondaire au lithium comprenant l'électrode négative pour une batterie secondaire au lithium selon la revendication 1.
